# EUROPÄISCHE PATENTSCHRIFT

(11) **EP 1 716 383 B1**
(45) Veröffentlichungstag und Bekanntmachung des Hinweises auf die Patenterteilung: **24.04.2013**
(21) Anmeldenummer: 05715381.9
(22) Anmeldetag: 17.02.2005
(51) Int. Cl.: F41G 1/387

(54) **MONTAGEEINRICHTUNG FÜR FEUERWAFFEN**
ASSEMBLY DEVICE FOR FIREARMS
DISPOSITIF DE MONTAGE POUR ARME A FEU

(30) Priorität: 19.02.2004 DE 102004008211
(43) Veröffentlichungstag der Anmeldung: 02.11.2006
(73) Patentinhaber: Heckler & Koch GmbH, 78727 Oberndorf/Neckar (DE)
(72) Erfinder: BECKMANN, Rudi, 78733 Aichhalden (DE)
(74) Vertreter: Jacoby, Georg
(86) Internationale Anmeldenummer: PCT/EP2005/001653
(87) Internationale Veröffentlichungsnummer: WO 2005/083351

(56) Entgegenhaltungen:
- DE-B- 1 256 113
- DE-C1- 4 444 677
- DE-U1- 9 002 215

## Beschreibung

Die Erfindung betrifft eine Montageeinrichtung für Feuerwaffen mit einer Klemmeinrichtung, mit der die Montageeinrichtung auf die Feuerwaffe wahlweise aufklemmbar ist, wobei die Klemmeinrichtung eine starre Klemmbackenanordnung und, dieser gegenüberliegend, eine bewegliche Klemmbackenanordnung trägt, und wobei ein Schwenkhebel mit einer Feineinstellung vorgesehen ist, um die bewegliche Klemmbackenanordnung zu verriegeln.

Aus der DE90 02 215 Ul ist eine derartige Montageeinrichtung bekannt.

Hierbei wird unter "Feuerwaffe" im allgemeinen eine für den Infanteriegebrauch geeignete Schußwaffe bezeichnet, die aber nicht notwendigerweise eine Handfeuerwaffe ist, sondern durchaus auch so schwer sein kann, daß sie sinnvoll nur von Lafetten o. dgl. abgefeuert werden kann, wie etwa ein schweres Maschinengewehr, ein Selbstladegranatwerfer o. dgl..

Die Montageeinrichtung trägt in der Regel eine Zielfernrohrmontage, die an der Unterseite einer optischen oder elektronischen Ziel-Erfassungseinrichtung angebracht ist.

Die einfachste bekannte Montageeinrichtung ist die sogenannte "Aufschubmontage", bei der an der Unterseite eines Zielfernrohrs zwei Klemmbügel angebracht sind, die jeweils mittels einer Schraube zusammengeklemmt oder auseinanderbewegt werden können und die seitlichen Kanten einer Schwalbenschwanzschiene umgreifen. In der Regel werden sie dabei in Längsrichtung auf diese Schiene aufgeschoben, können aber auch, wenn die genannten Schrauben lang genug sind, in gelöstem Zustand vom Profil abgehoben werden. Wegen der unsicheren Befestigung eines jeden Klemmbügels am Zielfernrohr ist diese Montage im allgemeinen nicht reproduzierbar, das heißt, nach jedem Aufsetzen des Zielfernrohrs muß die Waffe von neuem eingeschossen werden.

Dieser Nachteil wurde jedoch schon vor langem dadurch ausgeräumt, daß die beiden Klemmbügel fest miteinander verbunden wurden und an dieser Montage dann das Zielfernrohr befestigt wurde. Zudem wurde an dieser Montage ein Schwenkhebel angebracht, durch dessen Umlegen die Klemmeinrichtung festgezogen bzw. gelöst werden konnte (Zielfernrohr des K 43, deutsches Selbstladegewehr im zweiten Weltkrieg).

Da der Schwenkhebel sehr lang war, konnten die Klemmbügel über eine erhebliche Strecke bewegt werden, so daß das Aufsetzen und Abnehmen möglich war und die Montage nicht aufgeschoben werden mußte. Der Schwenkhebel arbeitete wie ein Kniehebel, so daß die Eigenfederung der Klemmbügel den Schwenkhebel in seiner Ruhelage festhielten. In diesem Fall ist allerdings eine Feineinstellung der Klemmbügel erforderlich, da die Toleranzen sonst ein zuverlässiges Festklemmen nicht erlaubt hätten. Deshalb wurde die Montage recht sperrig, weshalb sie auch seitlich am Gewehr angebracht wurde, da sonst die Visierlinie des Zielfernrohres zu hoch sitzen würde. Auch bei anderen Gewehren (z.B. Kalaschnikow) liegen die Verhältnisse ähnlich.

Der große Abstand von Profilschiene und Visierlinie verkleinert aber umgekehrt die äußeren Kräfte, denen die Montage noch standhalten kann. Würde man aber die Montage drastisch verkleinern, so würden sich auch die zulässigen Toleranzen verkleinern, und zudem würden die Kräfte nicht mehr aufgebracht werden können, die zum Bedienen des Schwenkhebels unerläßlich sind.

Aus diesem Grund liegt der Erfindung die Aufgabe zugrunde, eine Montageeinrichtung zu finden, die verkleinert ist, die aber dennoch die einfache Bedienung des Schwenkhebels zuläßt, aber zugleich keine engeren Toleranzen erfordert und dennoch den einwandfreien Sitz beispielsweise eines Zielfernrohrs oder dgl. auf oder an der Waffe gewährleistet.

Ganz besonders wichtig ist das einfache und rasche Lösen der Montage, um zu gewährleisten, daß bei einem eiligen Stellungswechsel das montierte, unter Umständen recht empfindliche Gerät vor dem Stellungswechsel praktisch ohne Verzögerung abgenommen werden kann.

Daraus ergibt sich bereits, daß der bevorzugte Verwendungsbereich der Erfindung auf militärischem Sektor liegt.

Zur Lösung dieser Aufgabe wird erfindungsgemäß vorgeschlagen, dass bei einer Montageeinrichtung der eingangs genannten Art eine erste Federanordnung, die den Schwenkhebel in Öffnungsrichtung über den gesamten Entriegelungsweg belastet, und zwischen der starren Klemmbackenanordnung und der beweglichen Klemmbackenanordnung wirkt, und durch eine zweite Federanordnung, die zwischen der beweglichen Klemmbackenanordnung und dem Schwenkhebel wirkt, die Feineinstellung bildet, eine sehr viel größere Federkraft aufbringt als die erste Federanordnung und den Schwenkhebel über einen Federweg in Öffnungsrichtung belastet, der so klein ist, dass die Montageeinrichtung bei voll belasteter, zweiter Federanordnung nicht von der Feuerwaffe freikommt.

Die erste Federanordnung bewirkt, daß der Schwenkhebel, wenn er zum Lockern der Montageeinrichtung über den Totpunkt der Kniehebelausbildung geschwenkt werden soll, durch die Federanordnung unterstützt wird. So ist die Zugkraft, die zum Öffnen des Schwenkhebels erforderlich ist, wenn er in seiner Ruhelage im Aufbau der Montageeinrichtung sitzt, geringer. Weit abstehende Handhaben können vermieden werden. Wird dagegen der Schwenkhebel gegen die Kraft der ersten Federanordnung geschlossen, dann ist zwar eine erhöhte Kraft erforderlich, aber diese kann leicht aufgebracht werden, denn es handelt sich um eine Druckkraft, die aufgrund der physiologischen Gegebenheiten leicht erbracht werden kann.

Die zweite Federanordnung ist äußerst hart und wird nur über den letzten Abschnitt der Schwenkbewegung des Schwenkhebels und erst kurz vor dem Überwinden des Totpunkts aufgebracht.

Aufgrund der genannten, physiologischen Gegebenheiten kann diese Kraft ohne weiteres aufgebracht werden, da sie eine Druckkraft ist. Beim Lösen des Schwenkhebels wird das Überwinden des Totpunktes erleichtert. In erster Linie wirkt die zweite Federanordnung aber als Feineinstellung, den sie klemmt kraftvoll die bewegliche Klemmbackenanordnung gegen eine Angriffsstelle an der Feuerwaffe und zieht damit die feste Klemmbackenanordnung in zuverlässigen Gegeneingriff mit einer anderen Angriffsstelle an der Feuerwaffe.

Der Federweg, den die zweite Federanordnung einräumt, ist aber in jedem Fall so klein, daß sich die Montageeinrichtung auch dann nicht von der Feuerwaffe lösen kann, wenn die zweite Federanordnung über ihren gesamten Federweg belastet wird, also wenn z.B. die Waffe mit Zielfernrohr eine Treppe hinunterfällt.

Die an sich einfache Ausführung der erfindungsgemäßen Montageeinrichtung sorgt für erhebliche, unerwartete Vorteile:
- da der Schwenkhebel mehr auf Druck als auf Zug belastet werden kann, kann er und damit die gesamte Montageeinrichtung kürzer werden,
- da die zweite Federanordnung den Schwenkhebel im Totpunkt belastet, ist es schwerer, diesen ungewollt zu lösen,
- da die zweite Federanordnung die bewegliche Klemmbackenanordnung belastet, ist keine Feineinstellung nötig, und
- da der Federweg der zweiten Federanordnung klein ist, ist ein Verlieren der von der Montageeinrichtung getragenen Zusatzeinrichtung auch bei Herunterfallen der Waffe unmöglich gemacht.

Bei einer bevorzugten Ausgestaltung ist die Klemmeinrichtung derart ausgestaltet, daß ihre Klemmbackenanordnungen an eine beiderseits hinterschnittene, sich etwa in Schußrichtung erstreckende Profilschiene klemmbar sind, die an der Feuerwaffe angebracht ist. Unter "Profilschiene" wird nicht nur eine auf der Waffe nachträglich montierte Schiene verstanden, wie etwa eine Picatinny-Schiene, sondern auch ein in die Waffe eingefrästes Schwalbenschwanzprofil, zwei parallele, hinterschnittene Kanten des Waffengehäuses o. dgl.. Dabei erstreckt sich die Schiene, allgemein gesagt, mit ihren Längskanten im wesentlichen parallel zur Längs-Hochebene der Waffe. Die Profilschiene kann so zum Beispiel durch zwei in Längsrichtung der Waffe verlaufende, übereinanderliegende, parallele Gehäusekanten gebildet sein. In der Regel wird hier aber von einer Picatinny-Schiene ausgegangen, die auf der Oberseite der Waffe angebracht ist.

Um den Schwenkhebel in seiner Ruhelage, also z.B. bei auf einer Waffe aufgesetztem Zielfernrohr, noch zu sichern, ist gemäß einer Ausgestaltung der Erfindung vorgeschlagen, daß eine lösbare Rasteinrichtung zum Festhalten des Schwenkhebels in seiner Ruhelage vorgesehen ist. Dies hat zudem den Vorteil, daß der Schwenkhebel nicht so untergebracht werden muß, daß seine versehentliche Bedienung ausgeschlossen ist, denn die Rasteinrichtung hält ihn zuverlässig in seiner Ruhelage fest, aber kann natürlich ohne weiteres gelöst werden.

Dem Fachmann stehen unzählige Rast- und Verriegelungseinrichtungen zur Verfügung. Es wird hier aber bevorzugt, daß die Rasteinrichtung eine im Schwenkhebel schwenkbar gelagerte Schwenkklappe aufweist, die den Schwenkhebel lösbar an der Montageeinrichtung festlegt. Der Schwenkhebel muß also nicht, wie es bei einer kleinen Montageeinrichtung an sich naheliegend wäre, an einer Ausbildung der Waffe oder der Profilschiene festgelegt werden, sondern an der Montageeinrichtung selbst, so daß der Schwenkhebel seinerseits die Montageeinrichtung nicht zu überragen braucht. So wird die gesamte Montageeinrichtung noch kompakter, so daß es z.B. auch möglich ist, auf einer Waffe zwei parallele Profilschienen mit je einer Montageeinrichtung anzubringen.

Es wäre ohne weiteres möglich und bei einer möglichst kleinen Ausführung vorteilhaft, eine Schwenkklappe aus eine Blattfeder anzufertigen, die ein Gegenelement an der Montageeinrichtung hintergreift, aber durch Kraftaufwand lösbar ist.

Bevorzugt ist aber, daß in der Montageeinrichtung ein Federschieber untergebracht ist, der nach außen federbelastet ist und auf einen Schenkel der Schwenkklappe einwirkt, so daß in der Ruhelage des Schwenkhebels die Schwenkklappe in den Rasteingriff gedrückt wird. So ist eine verhältnismäßig große Feder in der Montageeinrichtung untergebracht, und obwohl die gesamte Montageeinrichtung recht klein baut, sind die Elemente nicht miniaturisiert, so daß sie erheblichen Kräften und auch erheblicher Verschmutzung widerstehen.

Gemäß einer weiteren Ausgestaltung ist das Lösen der Rast derart ermöglicht, daß der Schwenkhebel eine durchgehende Betätigungsöffnung aufweist, in der der federbelastete Schenkel der Schwenkklappe sitzt und von außen her eindrückbar ist. So ist das Entriegeln praktisch ohne zusätzlichen Zeitaufwand mit der Hand möglich, die den Schwenkhebel ergreift, ohne daß die Gefahr des Entriegelns durch äußere Einwirkungen besteht, da die Betätigungsöffnung so klein ausgelegt werden kann, daß eine Betätigung praktisch nur mit der Fingerspitze möglich ist. Die übrigen Finger der selben Hand umgreifen dabei den Schwenkhebel und betätigen ihn. Da der Schwenkhebel unmittelbar vor Erreichen der Ruhelage einen Totpunkt überwunden hat, behält er ohnehin seine Ruhelage bei, ob er nun verriegelt ist oder nicht. Die Rasteinrichtung stellt somit nur eine Sicherung dar.

Da zum Lösen dieser Sicherung gegen den Schwenkhebel gedrückt werden muß, er aber zum Lösen der Klemmbackenanordnung in Gegenrichtung belastet werden muß, ist ein versehentliches Lösen etwa durch Einwirkung von Astwerk oder dergleichen praktisch unmöglich. Es ist eine einfache, unkomplizierte, aber höchst zweckmäßige Sicherung geschaffen; wegen der großen Abmessungen, die für die Feder möglich sind, ist die Belastung des Materials der Montageeinrichtung gering, so daß dieses ohne weiteres aus einer Leichtmetalllegierung hergestellt werden kann.

Es ist besonders zweckmäßig, daß die Montageeinrichtung eine längliche Grundfläche mit zwei Längskanten aufweist, daß längs der einen Längskante an deren Enden zwei feste Klemmbacken sitzen, und daß im Bereich der Mitte der gegenüberliegenden Längskanten eine bewegliche Klemmbacke angeordnet ist. Dabei sind die festen Klemmbacken bevorzugt aus Leichtmetallegierung angefertigt, aber da es zwei Klemmbacken sind, ist die dort auftretende Flächenpressung noch im zulässigen Bereich. Die bewegliche Klemmbacke dagegen ist mittig angebracht, so daß für die notwendige Federanordnung genügend Raum nach allen Seiten zur Verfügung steht, und außerdem nur eine Federanordnung erforderlich ist, nicht zwei.

Hierbei ist die Federeinrichtung bevorzugt so ausgebildet, daß quer zu den Längskanten eine Federeinrichtung in der Montageeinrichtung untergebracht ist, die aus einem Mittelbolzen gebildet ist, auf dem die erste und zweite Federanordnung übereinander sitzen und der mit der beweglichen Klemmbacke verbunden ist. Bolzen und Klemmbacke bilden, zumindest nach der Montage, ein einziges Bauteil. Der Schwenkhebel wirkt dabei von außen her auf den Bolzen und die Klemmbacke ein. Dabei ist die zweite Federanordnung bevorzugt von einem Tellerfederpaket gebildet, das eine sehr harte Federung liefert. Bevorzugt sitzt das Tellerfederpaket in einer Stahlbüchse, um eine Überbeanspruchung der Bohrung in der Montageeinrichtung aus Metall zu verhindern.

Bevorzugt ist die Montageeinrichtung nahe der Längskante, die der beweglichen Klemmbacke nächstgelegen ist, von einem Schwenkbolzen durchsetzt, der um eine vertikale Achse schwenkbar ist und an dem der Schwenkhebel gelagert ist.

Dabei muß die Montageeinrichtung nicht einstückig sein, sondern kann bevorzugt eine Stahlplatte aufweisen, in der der Schwenkhebel gelagert ist und die seitlich auf einen Leichtmetallklotz z.B. aufgeschraubt ist.

Die Erfindung wird in der beigefügten Zeichnung anhand eines Ausführungsbeispiels noch näher erläutert, wobei dieses Ausführungsbeispiel jedoch keinerlei Einschränkung der Erfindung darstellt.

In der Zeichnung ist:
Fig. 1 eine Ansicht der erfindungsgemäßen Montageeinrichtung, im Schrägbild gesehen,
Fig. 2 ein Längsschnitt durch die Montageeinrichtung der Fig. 1, in Ruhelage des Schwenkhebels, und
Fig. 3 eine Darstellung der Montageeinrichtung im Längsschnitt wie in Fig. 2, aber mit ausgeschwenktem Schwenkhebel.

In den Figuren wird bei der Definition spezieller Richtungen stets von der Normal-Schußlage der Waffe ausgegangen, bei der der Lauf längs einer horizontalen Achse verläuft und die Elevation der Visierung in einer vertikalen Ebene liegt, die die Laufachse enthält (Seitenabweichungen aufgrund des Geschoßdralls sind hier der Einfachheit halber nicht berücksichtigt).

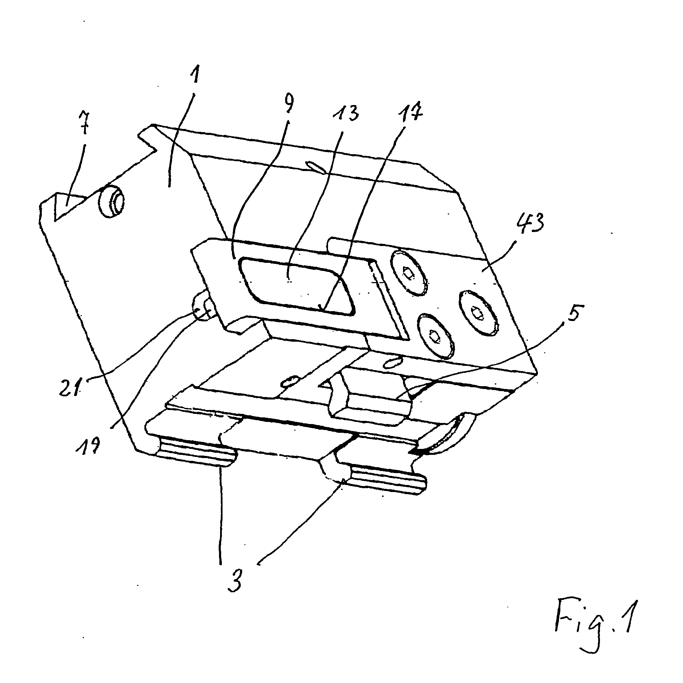

In Fig. 1 ist die Montageeinrichtung im Schrägbild schräg von unten und vorne her zu sehen. Diese weist einen quaderförmigen Klotz 1 aus Leichtmetall auf, mit zwei Längs-Schmalseiten, von denen die obere eine längsverlaufende Schwalbenschwanzaufnahme 7 zur Anbringung an einem Zielfernrohr oder dgl. aufweist und die untere zur Anbringung an einer Picatinny-Schiene eingerichtet ist und längs der einen langen Seitenkante zwei starre Klemmbacken 3 aufweist, denen gegenüberliegend in etwa der Mitte der Seitenkanten eine bewegliche Klemmbacke 5 angebracht ist.

Die bewegliche Klemmbacke 5 ist so zu den festen Klemmbacken 3 hin beweglich, daß die Picatinny-Schiene zwischen den Klemmbacken festgespannt wird, und so weit von den festen Klemmbacken 3 weg beweglich, daß der Klotz 1 mit dem Zielfernrohr nach oben von der Picatinny-Schiene abgehoben werden kann.

Die bewegliche Klemmbacke 5 aus Stahl ist mit einer Kolbenaufnahme 37 aus Stahl fest verbunden, die im Inneren des Klotzes 1 beweglich geführt ist. Die starren Klemmbacken 3 sind mit dem Klotz 1 einstückig aus Leichtmetall gebildet.

Auf der einen vertikalen, großen Längsfläche des Klotzes 1 ist nahe der beweglichen Klemmbacke 5 eine Abdeckplatte 43 aus Stahl fest aufgeschraubt, die die Kolbenaufnahme 37 und weitere Bauteile, auf die später eingegangen wird, im Klotz 1 hält und außerdem eine vertikale Schwenkachse 11 aufnimmt, um die ein Schwenkhebel 9 in einer horizontalen Ebene eine Schwenkbewegung durchführen kann.

Die Abdeckplatte 43 überdeckt bündig etwa die Hälfte des Klotzes 1, von dessen einen, vertikalen Kante ausgehend, und weist am anderen Ende zwei einander gegenüberliegende, vorspringende Schenkel auf, zwischen denen sich die Schwenkachse 11 erstreckt.

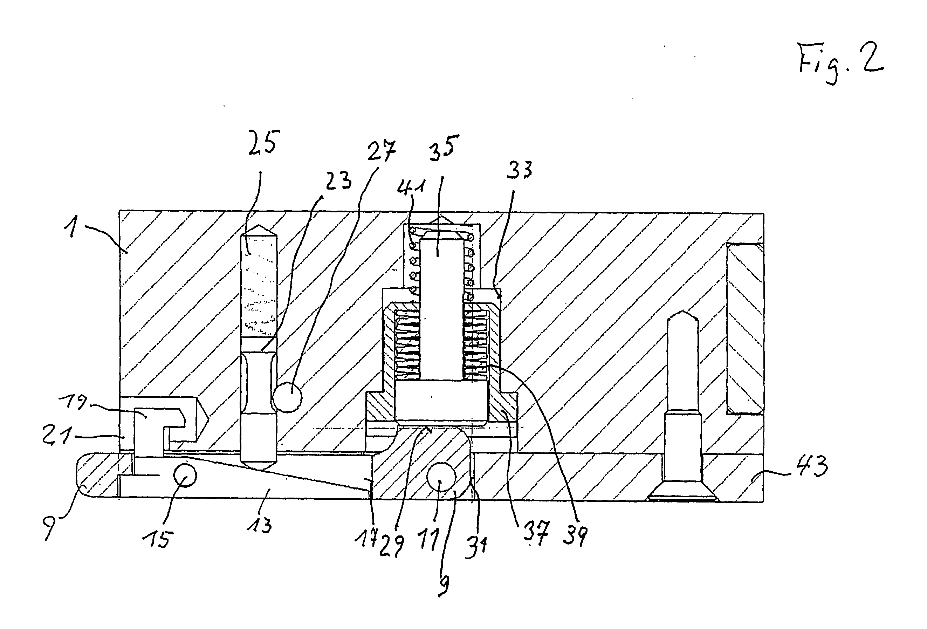

Zwischen den genannten, beiden Schenkeln ist der Schwenkhebel 9, der von der Schwenkachse 11 durchsetzt ist, abgewinkelt und in seiner Ruhelage (Fig. 2) der Mitte des Klotzes 1 zugewandt, wo er in einer Ruhefläche 29 endet, die sich parallel zum Schwenkhebel 9 erstreckt. Rechtwinklig zur Ruhefläche 29 ist, das Ende des Schwenkhebels 9 bildend, eine Öffnungsfläche 31 ausgebildet. Der Übergang zwischen den beiden Flächen 29 und 31 ist abgerundet und weist einen Maximalabstand zur Schwenkachse 11 auf, der Abstand der Öffnungsfläche 31 zur Schwenkachse 11 ist am kürzesten, und der Abstand der Ruhefläche 29 zur Schwenkachse liegt dazwischen. Die Differenz der Abstände der beiden Flächen 29 und 31 von der Schwenkachse 11 ist ein wenig größer als der maximale Bewegungsweg, in Querrichtung, den die bewegliche Klemmbacke 5 zurücklegen kann.

Dieses Ende des Schwenkhebels 9 wirkt unmittelbar auf einen Kolben 35 ein, der im Inneren des Klotzes 1 angeordnet ist und senkrecht zu dessen größten Außenflächen dann beweglich ist, wenn der Schwenkhebel 9 umgelegt wird.

Die Mittelachse des Kolbens 35 schneidet im wesentlichen senkrecht die Mittelachse der Schwenkachse 11 und wird durch zwei Federanordnungen 39, 41 nach außen gedrückt.

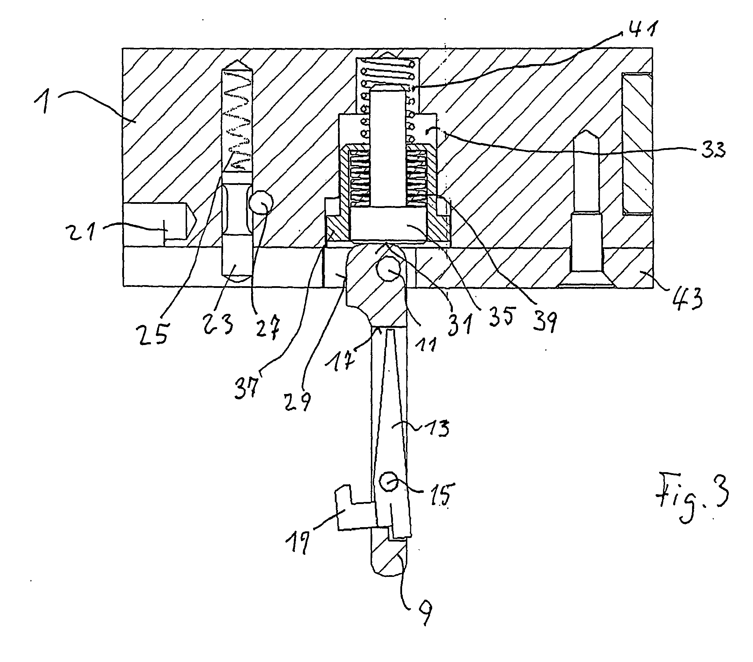

Wenn der Schwenkhebel 9 senkrecht von der Außenfläche des Klotzes 1 absteht (Fig. 3), dann befindet sich die Öffnungsfläche 31 in satter Anlage auf dem Kolben 35; wenn der Schwenkhebel an den Klotz angelegt ist (Fig. 2), dann befindet sich die Ruhefläche 29 in satter Auflage auf dem Kolben 35, der dann weiter in den Klotz 1 eingedrückt ist; wenn der Schwenkhebel 9 umgelegt wird, dann läuft die Kante zwischen den beiden Flächen 29 und 31 über den Kolben 35 und drückt ihn am weitesten ein.

Der Kolben 35 weist einen Kopf auf, auf dem sich ein Tellerfederpaket 39 abstützt. Das andere Ende des Tellerfederpakets 39 ruht auf dem Boden einer Bohrung in der Kolbenaufnahme 37. Der Kolben 35 läuft mit seinem Kopf innerhalb der genannten Bohrung und durchsetzt mit seinem Schaft den Boden der Kolbenaufnahme 37. Gegen die Außenseite dieses Bodens liegt eine wendelförmige Feder 41 an, die viel schwächer ist als das Tellerfederpaket 39 und den Schaft des Kolbens 35 umgibt. Diese Feder 41 liegt gegen den Boden einer Sackbohrung auf, die im Klotz 1 ausgebildet ist und Feder 41 und Kolbenaufnahme 37 aufnimmt.

Da die Kolbenaufnahme 37 fest mit der beweglichen Klemmbacke 5 verbunden ist und die wendelförmige Feder 41 gegen die Kolbenaufnahme 37 anliegt, wird diese und damit die bewegliche Klemmbacke 5 von den starren Klemmbacken 3 weg bewegt, wenn der Schwenkhebel 9 aus seiner Ruhelage (Fig. 2) in seine Öffnungslage (Fig. 3) bewegt wird.

Ist nun in diesem Zustand der Klotz 1 auf eine Picatinny-Schiene aufgesetzt und wird der Schwenkhebel 9 aus seiner Öffnungslage in seine Ruhelage bewegt, dann wird der Kolben 35 in Richtung der starren Klemmbacken 3 bewegt und nimmt über das Tellerfederpaket 39 die Kolbenaufnahme 37 und somit die bewegliche Klemmbacke 5 mit, bis diese fest gegen die Picatinny-Schiene anliegt. Dabei bewegt sich der Kolben 35 weiter als die bewegliche Klemmbacke 5, da ja der Totpunkt (das Eck zwischen den Flächen 29 und 31 des Schwenkhebels 11) überwunden werden muß und außerdem die bewegliche Klemmbacke 5 in Krafteingriff mit der Picatinny-Schiene stehen muß, um für einen sicheren Halt zu sorgen. Diese zusätzliche Bewegungsstrecke des Kolbens 35 wird durch Zusammendrücken des Tellerfederpakets 39 ermöglicht.

Dabei liegt (in der Ruhelage) der Schwenkhebel 9 in einer Nut des Klotzes 1, da die Stahlplatte 43 mit dessen Außenoberfläche bündig abschließt, und nur die vorderste Spitze des Schwenkhebels 9 steht nach vorne über die vordere Querfläche des Klotzes 1 über.

Der in der Nut liegende Arm des Schwenkhebels 9 weist eine längliche, rechteckige Aussparung 17 auf, die sich über den größten Teil der Länge dieses Armes erstreckt. In Nähe des freien Endes dieses Armes ist die sich horizontal erstreckende Aussparung 17 von einer vertikalen Schwenkklappenachse 15 durchsetzt, die in den Arm eingeschlagen ist. An dieser Schwenkklappenachse 15 ist eine Schwenkklappe 13 schwenkbar gelagert. Ausbildungen an der Schwenkklappe 13 und der Aussparung 17 lassen dabei nur eine geringe Schwenkbewegung zu, in der die Schwenkklappe 13 entweder bündig mit der Außenoberfläche des Schwenkhebels 9 abschließt (Fig. 2) oder ein wenig nach innen gedrückt ist (Fig. 3).

Nahe dem freien Ende des Schwenkhebels 9 weist die Schwenkklappe 13 einen senkrecht abstehenden, horizontalen Haken 19 auf, der in Ruhelage (Fig. 2) in einer entsprechende Hakenaufnahme 21 haltend eingreift. Im Klotz 1 ist eine horizontale, querverlaufende Sackbohrung ausgebildet, in der ein Schieber 23 nahe dem offenen Ende angeordnet und durch einen vertikalen Stift 27 so gehalten ist, daß eine kurze Bewegung längs der Achse der Sackbohrung ermöglicht ist. Zwischen dem Schieber 23 und dem Boden der Sackbohrung sitzt eine Spiralfeder 25, die den Schieber 23 so weit nach außen drückt, wie dies der Stift 27 ermöglicht. Hierbei tritt das Ende des Schiebers 23 aus der Sackbohrung heraus und mündet in die Aufnahmenut für den Schwenkhebel 9, genau dem Hauptteil der Schwenkklappe 13 gegenüberliegend auf der Seite der Schwenkhebelachse 15, die nicht den Haken 19 trägt.

Es ist ersichtlich, daß der Schieber 23 dann, wenn sich der Schwenkhebel 9 in seiner Ruhelage befindet, die Schwenkklappe 13 in ihre Lage drückt, in der sie bündig mit der Außenseite des Schwenkhebels 9 abschließt und dabei mit dem Haken 19 in die zugehörige Aufnahme 21 eingreift.

Da der Haken 19 abgeschrägt ist, fällt er beim Andrücken des Schwenkhebels 9 in seine Ruhelage, das durch die Wirkung der beiden Federn 39 und 41 erfolgt, selbständig in seine Aufnahme 21 und wird dort durch die Wirkung des Schiebers 23 auf die Schwenkklappe 13 gehalten. Soll die Montageeinrichtung abgenommen werden, dann wird von außen gegen die Schwenkklappe 13 gedrückt und der Schwenkhebel 9 zurückgezogen. Hierzu genügen Daumen und Zeigefinger einer Hand. Ist der Totpunkt überwunden, dann schiebt die Feder 41 den Schwenkhebel 9 vollends in seine offene Stellung der Fig. 3.

## Patentansprüche

1. Montageeinrichtung für Feuerwaffen mit einer Klemmeinrichtung, mit der die Montageeinrichtung auf Feuerwaffe wahlweise aufklemmbar ist, wobei die Klemmeinrichtung eine starre Klemmbackenanordnung (3) und, dieser gegenüberliegend, eine bewegliche Klemmbackenanordnung (5) trägt, und wobei ein Schwenkhebel (9) mit einer Feineinstellung vorgesehen ist, um die bewegliche Klemmbackenanordnung zu verriegeln, **gekennzeichnet durch** eine erste Federanordnung (41), die den Schwenkhebel (9) in Öffnungsrichtung über den gesamten Entriegelungsweg belastet, und zwischen der starren Klemmbackenanordnung (3) und der beweglichen Klemmbackenanordnung (5) wirkt, und **durch** eine zweite Federanordnung (39), die zwischen der beweglichen Klemmbackenanordnung (5) und dem Schwenkhebel (9) wirkt, die Feineinstellung bildet, eine sehr viel größere Federkraft aufbringt als die erste Federanordnung (39) und den Schwenkhebel (9) über einen Federweg in Öffnungsrichtung belastet, der so klein ist, dass die Montageeinrichtung bei voll belasteter, zweiter Federanordnung (39) und bei verriegelter beweglicher Klemmbackenanordnung (5) nicht von der Feuerwaffe freikommt.

2. Montageeinrichtung nach Anspruch 1, bei der die Klemmeinrichtung derart ausgestaltet ist, daß ihre Klemmbackenanordnung (3,5) an eine beiderseits hinterschnittene, sich etwa in Schußrichtung erstreckende Profilschiene klemmbar sind, die an der Feuerwaffe angebracht ist.

3. Montageeinrichtung nach Anspruch 1 oder 2, bei der eine lösbare Rasteinrichtung (19, 21) zum Festhalten des Schwenkhebels (9) in seiner Ruhelage vorgesehen ist.

4. Montageeinrichtung nach Anspruch 3, bei der die Rasteinrichtung eine im Schwenkhebel (9) schwenkbar gelagerte Schwenkklappe (13) aufweist, die den Schwenkhebel (9) lösbar an der Montageeinrichtung (1) festlegt.

5. Montageeinrichtung nach Anspruch 4, in der ein Federschieber (23) untergebracht ist, der nach außen federbelastet ist und auf einen Schenkel der Schwenkklappe (13) einwirkt, so daß in der Ruhelage des Schwenkhebels (9) die Schwenkklappe (13) in den Rasteingriff gedrückt wird.

6. Montageeinrichtung nach Anspruch 5, bei der der Schwenkhebel (9) eine durchgehende Betätigungsöffnung (17) aufweist, in der der federbelastete Schenkel der Schwenkklappe (13) sitzt und von außen her eindrückbar ist.

7. Montageeinrichtung nach einem der vorhergehenden Ansprüche, die eine längliche Grundfläche mit zwei Längskanten aufweist, wobei längs der einen Längskante an deren Enden zwei feste Klemmbacken (3) sitzen, und im Bereich der Mitte der gegenüberliegenden Längskante eine bewegliche Klemmbacke (5) angeordnet ist.

8. Montageeinrichtung nach Anspruch 7, in der quer zu den Längskanten eine Federeinrichtung untergebracht ist, die aus einem Mittelbolzen (37) gebildet ist, auf dem die erste (41) und zweite (39) Federanordnung übereinander sitzen und der mit der beweglichen Klemmbacke (5) verbunden ist.

9. Montageeinrichtung nach einem der vorhergehenden Ansprüche, die nahe der Längskante, die der beweglichen Klemmbacke (5) nächstgelegen ist, von einem Schwenkbolzen (11) durchsetzt ist, der um eine vertikale Achse schwenkbar ist und an dem der Schwenkhebel (9) gelagert ist.

## Claims

1. Assembly device for firearms comprising a clamping means, by which the assembly device can optionally be clamped on the firearm, the clamping means supporting a rigid clamping jaw arrangement (3) and a movable clamping jaw arrangement (5) opposite said rigid clamping jaw arrangement (3), and a swivel lever (9) is provided with a fine adjustment to lock the movable clamping jaw arrangement, **characterised by** a first spring arrangement (41) which loads the swivel lever (9) in the opening direction over the entire unlocking path, and is operative between the rigid clamping jaw arrangement (3) and the movable clamping jaw arrangement (5), and **characterised by** a second spring arrangement (39) which is operative between the movable clamping jaw arrangement (5) and the swivel lever (9), forms the fine adjustment, applies a very much greater spring force than the first spring arrangement (39) and loads the swivel lever (9) in the opening direction over a spring excursion which is so small that when the second spring arrangement (39) is fully loaded and when the movable clamping jaw arrangement (5) is locked, the assembly device is not released from the firearm.

2. Assembly device according to claim 1, wherein the clamping means is configured such that the clamping jaw arrangements (3, 5) thereof can be clamped on a bilaterally undercut profile rail which extends approximately in the direction of fire and is attached to the firearm.

3. Assembly device according to either claim 1 or claim 2, wherein a releasable catch means (19, 21) for securing the swivel lever (9) in its rest position is provided.

4. Assembly device according to claim 3, wherein the catch means comprises a swivel flap (13) which is mounted in the swivel lever (9) such that it can swivel therein and fixes the swivel lever (9) in a releasable manner on the assembly device (1).

5. Assembly device according to claim 4, in which a spring slide (23) is accommodated which is outwardly spring-loaded and acts on a flank of the swivel flap (13) so that the swivel flap (13) is pressed into the catch engagement in the rest position of the swivel lever (9).

6. Assembly device according to claim 5, wherein the swivel lever (9) has a continuous actuating opening (17) in which the spring-loaded flank of the swivel flap (13) sits and can be pressed therein from outside.

7. Assembly device according to any one of the preceding claims, which comprises an elongate base area with two longitudinal edges, wherein two fixed clamping jaws (3) sit along the one longitudinal edge on the ends thereof, and a movable clamping jaw (5) is arranged in the central region of the opposite longitudinal edge.

8. Assembly device according to claim 7, in which transversely to the longitudinal edges a spring means is accommodated which is formed from a central stud (37), on which the first spring arrangement (41) and the second spring arrangement (39) sit, one above the other, and which is connected to the movable clamping jaw (5).

9. Assembly device according to any one of the preceding claims, which is penetrated close to the longitudinal edge nearest the movable clamping jaw (5) by a swivel pin (11) which can swivel about a vertical axis and on which the swivel lever (9) is mounted.

## Revendications

1. Dispositif de montage pour arme à feu, avec un dispositif de serrage au moyen duquel le dispositif de montage peut être serré en option contre l'arme à feu, le dispositif de serrage présentant un ensemble à mâchoires de serrage fixe (3) et, opposé à celui-ci, un ensemble à mâchoire de serrage mobile (5), et un levier pivotant (9) à réglage de précision étant prévu pour verrouiller l'ensemble à mâchoire de serrage mobile, **caractérisé par** un premier agencement de ressort (41) qui contraint le levier pivotant (9) dans la direction d'ouverture sur toute la course de déverrouillage, et qui agit entre l'ensemble à mâchoires de serrage fixe (3) et l'ensemble à mâchoire de serrage mobile (5), et par un deuxième agencement de ressort (39), qui agit entre l'ensemble à mâchoire de serrage mobile (5) et le levier pivotant (9) et qui constitue le réglage de précision, applique une force de ressort bien supérieure au premier agencement de ressort (39) et contraint le levier pivotant (9) dans la direction d'ouverture sur une course de ressort limitée de manière à ne pas dégager le dispositif de montage de l'arme à feu quand le deuxième agencement de ressort (39) est totalement contraint et que l'ensemble à mâchoire de serrage mobile (5) est verrouillé.

2. Dispositif de montage selon la revendication 1, où le dispositif de serrage est réalisé de telle manière que ses ensembles à mâchoires de serrage (3, 5) peuvent être serrés sur un rail profilé à gorge de dégagement sur ses deux côtés, s'étendant sensiblement en direction de tir, et appliqué contre l'arme à feu.

3. Dispositif de montage selon la revendication 1 ou 2, où un dispositif d'enclenchement (19, 21) amovible est prévu pour le maintien du levier pivotant (9) dans sa position de repos.

4. Dispositif de montage selon la revendication 3, où le dispositif d'enclenchement comporte un volet pivotant (13) monté de manière à pouvoir pivoter dans le levier pivotant (9), et qui fixe de manière amovible le levier pivotant (9) sur le dispositif de montage (1).

5. Dispositif de montage selon la revendication 4, où est logé une coulisse à ressort (23) contrainte par un ressort vers l'extérieur et agissant sur un côté du volet pivotant (13), de manière à pousser le volet pivotant (13) dans l'enclenchement en position de repos du levier pivotant (9).

6. Dispositif de montage selon la revendication 5, où le levier pivotant (9) présente une ouverture d'actionnement (17) continue où est logé le côté contraint par ressort du volet pivotant (13) et qui peut être enfoncée de l'extérieur.

7. Dispositif de montage selon l'une des revendications précédentes, comportant une surface de base oblongue avec deux longueurs, où deux mâchoires de serrage fixes (3) sont disposées sur une première longueur aux extrémités de celle-ci, et une mâchoire de serrage mobile (5) dans la région du milieu de la longueur opposée.

8. Dispositif de montage selon la revendication 7, où un dispositif à ressort est logé transversalement aux longueurs, lequel est constitué d'un axe central (37) sur lequel le premier (41) et le deuxième (39) agencements de ressort reposent l'un au-dessus de l'autre et qui est relié à la mâchoire de serrage mobile (5).

9. Dispositif de montage selon l'une des revendications précédentes, traversé par un axe pivotant (11) à proximité de la longueur la plus proche de la mâchoire de serrage mobile (5), lequel peut pivoter autour d'un axe vertical et contre lequel le levier pivotant (9) est monté.
